# EUROPEAN PATENT APPLICATION

(11) **EP 4 644 173 A1**
(43) Date of publication of application: **05.11.2025**
(21) Application number: 25172843.2
(22) Date of filing: 28.04.2025
(51) Int. Cl.: B60N 2/58, B60N 2/70, B60N 2/72

(54) **SEAT ASSEMBLY AND METHOD OF ASSEMBLY**

(30) Priority: 03.05.2024 US 202418654232; 09.08.2024 DK PA202470211
(71) Applicant: Lear Corporation, Southfield, MI 48033 (US)
(72) Inventor: Duncan, Bradley C., Harrison Township, MI, 48045 (US); Johnson, Christopher D., Novi, MI, 48377 (US); Hale, David, Northville, MI, 48168 (US)
(74) Representative: Grünecker Patent- und Rechtsanwälte PartG mbB

(57) **Abstract**

A seat assembly and method of assembly. The seat assembly comprises a frame, a cushion, and a fastening arrangement. The cushion is disposed on the frame and comprises a mesh member comprising a set of filaments of polymeric material. The fastening arrangement extends through the aperture in the frame and secures the cushion to the frame.

## Description

### TECHNICAL FIELD

This relates to a seat assembly and a method of assembly.

### BRIEF DESCRIPTION OF THE DRAWINGS

Figure 1 is a perspective view of an example of a seat assembly including a filament mesh structure.
Figure 2 is schematic view of an example of a manufacturing system for making the filament mesh structure.
Figure 3 is a magnified view of an example of the filament mesh structure.
Figure 4 is a side view of a portion of the seat assembly in which a trim cover is omitted for clarity.
Figure 5 is a section view of the seat assembly along section line 5-5 including a trim cover and a first example of a fastening arrangement.
Figure 6 is a section view of the seat assembly and a second example of a fastening arrangement.
Figure 7 is a section view of the seat assembly and a third example of a fastening arrangement.
Figure 8 is a section view of the seat assembly and a fourth example of a fastening arrangement.
Figure 9 is a section view of the seat assembly and a fifth example of a fastening arrangement.
Figure 10 is a section view of the seat assembly and a sixth example of a fastening arrangement.
Figure 11 is a section view of the seat assembly and a sixth example of a fastening arrangement.
Figure 12 is a section view of the seat assembly and a sixth example of a fastening arrangement.
Figure 13 is a section view of the seat assembly and a sixth example of a fastening arrangement.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It is to be understood that the disclosed embodiments are merely exemplary and that various and alternative forms are possible. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ embodiments according to the disclosure.

"One or more" includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising" when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

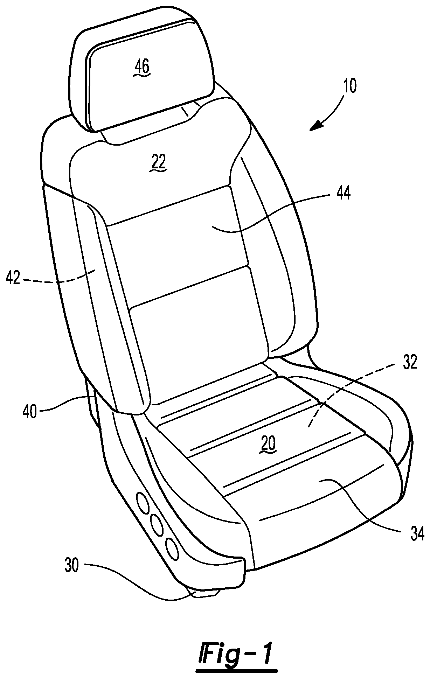

Referring to Figure 1, an example of a seat assembly 10 is shown. In some embodiments, the seat assembly 10 is a vehicle seat assembly, such as for a land vehicle like a car, truck, bus, or the like, or for a non-land vehicle like aircraft or watercraft. For example, a seat assembly 10 for a land vehicle may be shaped and sized as a front row driver or passenger seat, a second, third, or other rear row seat, and may include bucket-style seats, bench-style seats, or other seat styles. Furthermore, the seat assembly 10 may be a non-stowable seat or a stowable seat that may be foldable and stowable in a cavity in the vehicle floor. Additionally, the seat assembly 10 may be configured for non-vehicle applications such as furniture.

In the configuration shown in Figure 1, the seat assembly 10 includes a seat bottom 20 and a seat back 22. It is contemplated that the seat back 22 may be omitted in some configurations, such as when the seat assembly 10 is configured as a motorcycle seat or stool.

The seat bottom 20 is configured to receive a seated occupant and support the pelvis and thighs of the seat occupant. The seat bottom 20 includes a seat bottom frame 30, a cushion 32, and a trim cover 34.

The seat bottom frame 30 is a structure that supports the cushion 32. The seat bottom frame 30 includes one or more structural members and may be made of any suitable material, such as a metal alloy, polymeric material, fiber reinforced polymeric material, or combinations thereof In some configurations, the seat bottom frame 30 includes a panel, seat pan, suspension mat, or suspension wires upon which the cushion 32 is disposed.

The cushion 32 is disposed on the seat bottom frame 30. The cushion 32 is made of a compliant material that supports the seat occupant and distributes load forces from the seat occupant to the seat bottom frame 30. The cushion 32 and associated methods of manufacture will be discussed in more detail below.

The trim cover 34 covers at least a portion of the cushion 32. In addition, the trim cover 34 provides one or more visible exterior surfaces of the seat back 22. The seat occupant may be disposed on the trim cover 34 when seated upon the seat assembly 10. The trim cover 34 is made of any suitable material or materials, such as fabric, leather, leatherette, vinyl, or combinations thereof. The trim cover 34 may include a plurality of trim panels that are assembled in any suitable manner, such as by fusing or stitching. The trim cover 34 is attached to the seat bottom frame 30, the cushion 32, or both. For example, the trim cover 34 may include trim attachment features that are attached to the seat bottom frame 30, the cushion 32, or both, to inhibit removal of the trim cover 34 and help conform the trim cover 34 to the contour of the seat bottom frame 30, the cushion 32, or both.

The seat back 22 is configured to support the back of a seated occupant. The seat back 22 is disposed adjacent to the seat bottom 20. For example, the seat back 22 may be disposed above the seat bottom 20 and near the rear side of the seat bottom 20. The seat back 22 extends in a generally upward direction away from the seat bottom 20. In some configurations, the seat back 22 is mounted to the seat bottom 20 and may be pivotable with respect to the seat bottom 20. In other configurations, the seat back 22 is not mounted to the seat bottom 20. For instance, a vehicle seat back may be mounted to the vehicle body structure, such as in some second row seat assemblies. The seat back 22 includes a seat back frame 40, a cushion 42, a trim cover 44, and optionally a head restraint 46.

The seat back frame 40 is a structure that supports the cushion 42. The seat back frame 40 includes one or more structural members and may be made of any suitable material, such as a metal alloy, polymeric material, fiber reinforced polymeric material, or combinations thereof. In some configurations, the seat back frame 40 includes a panel, pan, suspension mat, or suspension wires upon which the cushion 42 is disposed. It is also contemplated that the seat back frame 40 may be integrally formed with the seat bottom frame 30 in some configurations.

The cushion 42 is disposed on the seat back frame 40. The cushion 42 is made of a compliant material that supports the seat occupant and distributes load forces from the seat occupant to the seat back frame 40. It is contemplated that the cushion 42 may be integrally formed with the cushion 32 of the seat bottom 20 or may be separate from the cushion 32 of the seat bottom 20. The cushion 42 and associated methods of manufacture will be discussed in more detail below.

The trim cover 44 covers at least a portion of the cushion 42. In addition, the trim cover 44 provides one or more visible exterior surfaces of the seat back 22. The seat occupant may be disposed on the trim cover 44 when seated upon the seat assembly 10. The trim cover 44 is made of any suitable material or materials, such as fabric, leather, leatherette, vinyl, or combinations thereof. The trim cover 44 may include one trim panel or a plurality of trim panels that are assembled in any suitable manner, such as by fusing or stitching. The trim cover 44 is attached to the seat back frame 40, the cushion 42, or both. For example, the trim cover 44 may include trim attachment features that are attached to the seat back frame 40, the cushion 42, or both, to inhibit removal of the trim cover 44 and help conform the trim cover 44 to the contour of the seat back frame 40, the cushion 42, or both.

The head restraint 46, if provided, is configured to support the head of a seat occupant. The head restraint 46 is disposed at the top of the seat back 22 or at an end of the seat back 22 that is disposed opposite the seat bottom 20. The head restraint 46 may be moveable in one or more directions with respect to the seat back 22 or may be integrally formed with the seat back 22.

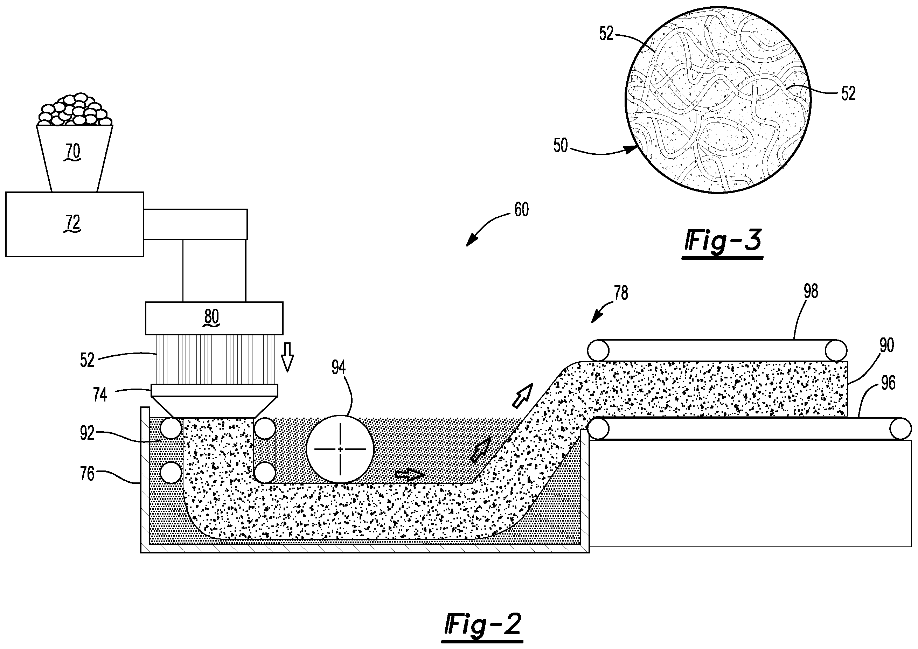

Referring to Figure 3, a magnified view of an example of a cushion 50 is shown. The cushion is generically designated with reference number 50 for convenience in reference. It is to be understood that the structure and description of the cushion 50 is applicable to the cushion 32 of the seat bottom 20, the cushion 42 of the seat back 22, or both.

The cushion 50 is a non-foam component or includes at least one non-foam component. The non-foam component is primarily referred to as a mesh member but may also be referred to as a stranded member, looped member, entangled member, filament mesh structure, mesh structure, stranded mesh, looped mesh, entangled mesh, or mesh cushion. In Figure 3, the cushion 50 is depicted as a non-foam component that does not include a foam component or foam material, such as urethane or polyurethane foam; however, it is contemplated that the cushion 50 may also include a foam component or foam material in addition to a non-foam component to provide additional cushioning or localized cushioning for a seat occupant. For example, foam material may be provided between the cushion 50 and a trim cover (e.g., trim cover 34, 44) that is disposed on the cushion 50, within the cushion 50, or combinations thereof. Reducing the amount of foam material that is provided with the cushion 50 or eliminating foam material from the cushion 50 reduces weight and may improve support and comfort of a seat occupant. In addition, eliminating foam material may facilitate recycling of the cushion 50.

The cushion 50 is described below in the context of a cushion 50 that does not include foam material. In this context, the cushion 50 is made of filaments 52 of polymeric material that are randomly looped, bent, curled, or entangled and are bonded together as will be discussed in more detail below. A filament 52 is directly bonded to another filament 52 rather than being indirectly bonded with a resin or other intermediate material. For clarity, only some filaments 52 are labeled in Figure 3.

The filaments 52, which may also be referred to as strands or threads, are made of any suitable material or materials. In some configurations, the filaments 52 are made of a polymeric material or thermoplastic material, such as a thermoplastic resin that is polyamide-based, polyester-based, polyimide-based, polyolefin-based (e.g., polypropylene-based, polyethylene-based, etc.), polystyrene-based, or combinations thereof. As one example, a polyethylene-based filament may be made of linear low density polyethylene (LLPDE). The filament material may be recyclable unlike foam material or more easily recycled than foam material. It is also contemplated that a filament 52 may comprise reinforcement fibers and that the reinforcement fibers may not be made of a thermoplastic material.

In some configurations, a filament 52 may be a monofilament that is made of a single material. In some configurations, a filament 52 is made of multiple materials. As an example, a filament 52 made of multiple materials may include a core that is made of a first thermoplastic material and a sheath that encircles the core and is made of a second thermoplastic material that differs from the first thermoplastic material. It is contemplated that the cushion 50 may include a combination of monofilaments and filaments that are made of multiple materials and are not monofilaments.

Filaments 52 that are randomly looped, bent, looped, curled, or entangled are bonded together where one filament 52 contacts another filament 52, thereby resulting in a lightweight, air permeable cushion (e.g., cushion 32 and/or 42) or mesh structure having openings or voids between the filaments 52. An example of a manufacturing system 60 of making a cushion or filament mesh structure is also shown in Figure 2. In this example, the manufacturing system 60 includes a material supply 70, an extruder 72, and a funnel 74. The manufacturing system 60 also includes a cooling tank 76 and a material handling subsystem 78.

Referring to Figure 2, the material supply 70 holds material stock that is to be extruded, such as solid beads, flakes, granules, pellets, or powder made of the material. In some configurations, the material supply 70 is configured as a container or hopper. The material supply 70 provides material stock to the extruder 72.

The extruder 72 melts the material stock and extrudes the material stock into a set of filaments 52. The extruder 72 may have any suitable configuration. In some configurations, the extruder 72 includes a barrel that receives a rotatable screw and heating elements. Rotation of the screw forces the material to move through the barrel and helps heat the material due to the friction generated as the screw rotates. The material exits the barrel under pressure and in a molten state and is transported under pressure to a die 80 of the extruder 72.

The die 80, which may also be referred to as a die plate or extrusion die, has multiple through holes or filament forming openings through which the molten material passes. A single filament 52 is extruded from each through hole. The filaments 52 fall downward from the die 80 under the force of gravity into the funnel 74.

The funnel 74 consolidates or groups the filaments 52 into a more compact arrangement in which the filaments bend, curl, or loop and a filament 52 contacts and bonds to at least one other filament 52. The funnel 74 has an inlet opening or funnel inlet and an outlet opening or funnel outlet that is smaller than the funnel inlet. Individual separated filaments 52 enter the funnel inlet. The filaments 52 bend, curl, or loop and move into contact as they accumulate. The filaments 52 move through the funnel 74 toward the funnel outlet. Some filaments may slide along the funnel 74 or an intervening sheet that is disposed on the funnel 74 as the filaments move toward the funnel outlet. Bonds are formed between filaments 52 at the points of contact while openings or voids between filaments 52 are present at other locations where one filament 52 does not contact or bond to another filament 52. The entangled and bonded filaments 52 pass through the funnel outlet of the funnel 74 and enter the cooling tank 76. For convenience in reference, the bonded filaments 52 are referred to as a mesh member or filament mesh structure 90.

The cooling tank 76 holds a liquid, such as water or a mixture of water and another fluid. The liquid in the cooling tank 76 helps support the entangled and bonded filaments 52 to limit further compacting or consolidation of the filaments 52 into a less open or less porous arrangement and maintains a desired porosity and density of the filament mesh structure 90. Thus, the liquid provides some buoyancy or resistance that can result in additional bending, curling, or looping of the filaments 52 adjacent to the surface of the liquid or within the funnel 74 to further build the filament mesh structure 90. The liquid also cools the filaments 52 when the filaments 52 are in the liquid. For instance, the liquid cools the filaments 52 from the outside to solidify the filaments 52 and prevent the filaments 52 from bonding at additional locations. At this point, the filaments 52 are relatively stiff and no longer in a plastic state and thus generally maintain a shape and are not moldable or reformable without being reheated.

The material handling subsystem 78 transports the filament mesh structure 90 through the cooling tank 76. The material handling subsystem 78 includes various rollers and conveyors that help move the filament mesh structure 90 through the liquid and out of the liquid. In some configurations, a tractor conveyor 92 is provided in the cooling tank 76 to help pull the filament mesh structure 90 away from the funnel 74 and to counter buoyancy of the filaments 52.

One or more other rollers, such as roller 94, keep the filament mesh structure 90 submerged in the liquid and guide the filament mesh structure 90 through the cooling tank 76. For example, the roller 94 may guide the filament mesh structure 90 toward a conveyor belt 96 and shaker table 98 that are disposed outside of the cooling tank 76. The shaker table 98 shakes the filament mesh structure 90 while it is on the conveyor belt 96 to remove liquid. Alternatively or in addition, the filament mesh structure 90 may be squeezed to remove liquid, air may be blown toward the filament mesh structure 90 to help remove liquid from the filament mesh structure 90, or both. It is also contemplated that the filament mesh structure 90 may also be allowed to drip dry, or dry in ambient air.

The manufacturing system 60 described above is a continuous flow process in which the filament mesh structure 90 is formed as a continuous structure when filament extrusion is not interrupted. Further processing of the filament mesh structure 90 is provided after exiting the cooling tank 76 to cut the filament mesh structure 90 into individual pieces or blanks for individual cushions. Such processing is conducted by a cutting system of the manufacturing system 60. The cutting system may be of any suitable type. For instance, the cutting system may employ a blade, knife, hot knife, saw, fluid jet, or the like to cut the filaments 52 of the filament mesh structure 90 into a blank. The cutting system may be used to shape or contour the blank. It is also contemplated that a blank may be further shaped or contoured with other manufacturing processes, such as molding of the entire blank or a portion thereof.

With the above process, the cushion 50 may be formed of a set of filaments 52, wherein at least two members of the set of filaments 52 are looped and bonded to each other. In one or more embodiments, each member of the set of filaments 52 is looped and bonded to at least one other member of the set of filaments.

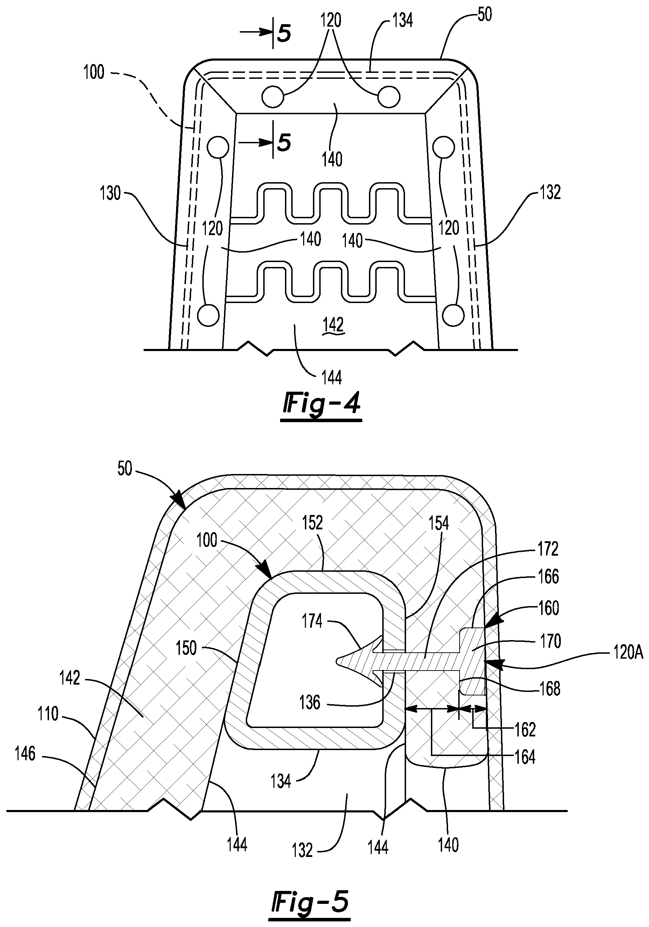

Referring to Figures 4-13, examples of a portion of the seat assembly 10 are shown. The portion of the seat assembly 10 is a portion of a seat bottom 20 or a seat back 22. Since the portion of the seat assembly 10 may be the seat bottom 20 or the seat back 22, the cushion, the frame, and the trim cover are given generic references for clarity and convenience in reference.

The cushion is generically designated with reference number 50 as previously discussed.

The frame is generically designated with reference number 100. It is to be understood that the frame 100 may be the seat bottom frame 30 or the seat back frame 40. The cushion 50 is disposed on the frame 100.

The trim cover is generically designated with reference number 110 in Figures 5-13. It is to be understood that the trim cover 110 may be the trim cover 34 of the seat bottom 20 or the trim cover 44 of the seat back 22. The trim cover 110 is not shown in Figure 4 for clarity.

As an overview, a cushion 50 that comprises a mesh member or filament mesh structure 90 may move or slide with respect to the frame 100 when the cushion 50 is not secured to the frame 100, such as during assembly when another component is installed on or mounted to the cushion 50. For instance, the cushion 50 may move or slide with respect to the frame 100 when the trim cover 110 is pulled over or installed over the cushion 50 and the frame 100. Similarly, intervening components disposed between the cushion 50 and the trim cover 110, such as a heating pad, may also be displaced from a desired location on the cushion 50. As a result, components such as the trim cover 110, the heating pad, and the like may be difficult to install or require additional time to install when the cushion 50 is not secured to the frame 100. Furthermore, in configurations where the cushion 50 is folded around or wrapped around multiple sides of the frame 100, the flaps or segments of the cushion 50 that are folded around or wrapped around the frame 100 are prone to straighten rather than follow the contour of the frame 100 or surfaces of the frame 100 upon which the cushion 50 is disposed. As a result, the flaps of the cushion 50 may interfere with installation of other components, such as the trim cover, when the flaps are not secured to the frame 100. In addition, a cushion 50 that is disposed in a generally vertical orientation, such as along the height of a seat back frame, may droop, sag, slide, or move due to the force of gravity when the cushion 50 is not secured to the frame 100, which may also displace the cushion 50 from a desired position and lead to additional assembly time or effort.

To address these issues, the present invention secures (e.g., attaches, fastens, couples) the cushion 50 to the frame 100 with a fastening arrangement 120, some examples of which are shown in Figures 5-13. The fastening arrangement 120 helps hold the cushion 50 in position or in a desired location with respect to the frame 100. One or more fastening arrangements 120 may secure the cushion 50 to the frame 100. For instance, as is shown in Figure 4 a plurality of fastening arrangements 120 may be provided that secure the cushion 50 to the frame 100 at separate locations. In some configurations, the fastening arrangement 120 extends through an aperture 136 (e.g., hole, opening, slit, slot, through hole) in the frame 100. Example of apertures 136 are shown in Figures 5-13. The fastening arrangement 120 is generically designated with reference number 120 and may be followed by a letter (e.g., A, B, C, etc.) when referring to a fastening arrangement shown in a particular figure, such as Figures 5-13.

The fastening arrangement 120 is detached from (e.g., disconnected, decoupled, separated, not attached, not coupled, not secured to) the trim cover 110. As such, the fastening arrangement 120 secures the cushion 50 to the frame 100 but does not secure, attach, couple, or fasten the trim cover 110 to the cushion 50, to the frame 100, or both. Thus, the fastening arrangement 120 differs from components that secure the trim cover 110 to the frame 100.

In some configurations, the fastening arrangement 120 supports the trim cover 110. For instance, the fastening arrangement 120 may directly support the trim cover 110 or indirectly support the trim cover 110. The fastening arrangement 120 may directly support the trim cover 110 such as by contacting or engaging a side of the trim cover 110 that faces toward the cushion 50. The fastening arrangement 120 may indirectly support the trim cover 110, such as when an intervening component or layer is disposed between the fastening arrangement 120 and the side of the trim cover 110 that faces toward the cushion 50 and the fastening arrangement 120.

Referring initially to Figures 4 and 5, an example of a portion of the frame 100 is shown. In some configurations, the frame 100 includes a plurality of frame members, such as a first frame member 130, a second frame member 132, and a third frame member 134. One or more frame members (e.g., first frame member 130, second frame member 132, third frame member 134) include an aperture 136 (e.g., opening, hole, through hole, slit, slot). In some configurations, the aperture 136 is encircled or encompassed by a frame member. In some configurations, the aperture 136 may be open ended and may be partially encircled or encompassed by a frame member. The aperture 136 may facilitate attachment or mounting of the fastening arrangement 120 to the frame 110 as will be discussed in more detail below.

The first frame member 130, the second frame member 132, and the third frame member 134 may be integrally formed or may be separate components that are assembled to each other, such as by welding or with one or more fasteners. The first frame member 130 and the second frame member 132 may be disposed along opposing lateral sides of the seat assembly 10. For instance, the first frame member 130 and the second frame member 132 may be disposed along opposing left and right lateral sides of the seat bottom 20 or opposing left and right lateral sides of the seat back 22. The third frame member 134 may interconnect the first frame member 130 in the second frame member 132. For example, the third frame member 134 may extend from the first frame member 130 to the second frame member 132. As an example, the third frame member 134 may be a front cross member or back cross member of the seat bottom frame 30. As another example, the third frame member 134 may be an upper cross member or lower cross member of the seat back frame 40.

The cushion 50 may engage or contact one or more frame members, such as the first frame member 130, the second frame member 132, the third frame member 134, or combinations thereof. In some configurations, the cushion 50 may contact or engage one or more sides of the frame 100 or a frame member. For instance, in some configurations the cushion 50 may include one or more flaps 140 (best shown in Figure 4) that are folded around or wrapped around the frame 100 or a frame member such that the flap 140 engages or contacts multiple sides of the frame 100 or a frame member. In Figure 4, three flaps 140 are illustrated. A flap 140 is separated from another flap 140 by a cut or slit through the cushion 50. Two cuts or slits are represented in Figure 4 by the angled lines extending from the two upper corners of the cushion 50 between adjacent flaps 140. A flap 140 may be an integral part of the cushion 50. For example, a flap 140 may be integrally formed with a main or central body 142 of the cushion 50 that may support a seat occupant and a flap 140 may extend from or be provided along the perimeter of the main or central body 142.

Referring primarily to Figure 5, the cushion 50 may have a first side 144 and a second side 146. The first side 144 may face toward the frame 100. For instance, the first side 144 or a portion thereof may engage or contact the frame 100. The first side 144 may be provided with the main or central body 142 and with a flap 140. In some configurations, such as when a flap 140 is provided, the first side 144 of the cushion 50 engages or contacts multiple sides of the frame 100 or a frame member. In the examples shown in Figures 5-12, the cushion 50 is folded or wrapped around the frame 100 such that the main or central body 142 engages a first frame side 150 of the frame 100 or a frame member and a flap 140 engages or contacts one or more additional sides of the frame 100 or a frame member, such as a second frame side 152 and a third frame side 154. In some configurations, the second frame side 152 extends from the first frame side 150 and the third frame side 154 extends from the second frame side 152. For instance, the second frame side 152 may extend from the first frame side 150 the third frame side 154. Thus, in this example the first side 144 of the cushion 50 engages the first frame side 150, the second frame side 152, and the third frame side 154. It is also contemplated that the cushion 50 may wrap around or extend to fewer sides of the frame 100 or a frame member. For instance, the cushion 50 may engage the first frame side 150 and the second frame side 152 without extending to the third frame side 154.

The second side 146 of the cushion 50 is disposed opposite the first side 144. As such, the second side 146 may face away from the frame 100 and may face toward and may engage or contact the trim cover 110.

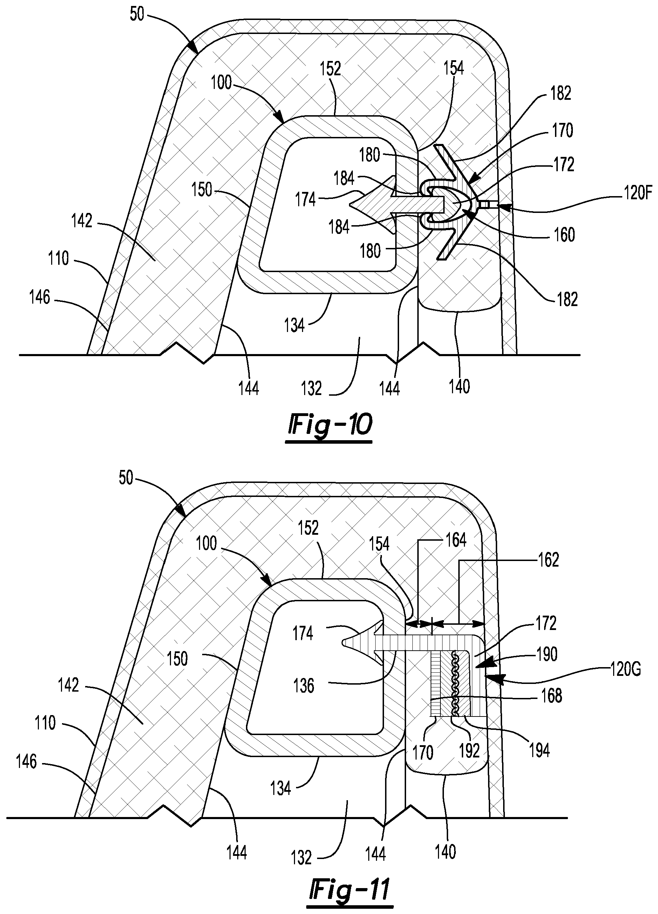

The cushion 50 includes a hole 160 (e.g., opening, slit, slot). In some configurations, the hole 160 is a through hole that extends from the first side 144 of the cushion 50 to the second side 146 of the cushion 50. Examples of holes 160 that are configured as through holes are shown in Figures 5-9 and 11-13. In some configurations, the hole 160 is a blind hole, such as is shown in Figure 10. For instance, a hole 160 that is configured as a blind hole may extend from the first side 144 of the cushion 50 toward but not to the second side 146 of the cushion 50. The fastening arrangement 120 is received in the hole 160 in the cushion 50. The fastening arrangement 120 is configured to extend through the hole 160 in the cushion 50.

Referring primarily to Figure 5, in some configurations the hole 160 in the cushion 50 comprises a recess 162 and a connecting portion 164.

The recess 162 (e.g., indentation, cavity, open sided slot) may extend from the second side 146 of the cushion 50 toward the first side 144 of the cushion 50. The recess 162 may receive an anchor of the fastening arrangement 120 as will be discussed in more detail below. For instance, the recess 162 may extend from the second side 146 toward or to the connecting portion 164. In some configurations, the recess 162 comprises or may be at least partially defined by a recess perimeter 166 and a recess bottom 168.

The recess perimeter 166 extends from the second side 146 of the cushion 50 to the recess bottom 168. The recess perimeter 166 may include one or more sides that encircle, encompass, or form a perimeter boundary of the recess 162. In some configurations, the recess perimeter 166 may have a circular or arcuate configuration; however, it is contemplated that the recess perimeter 166 may have a noncircular configuration, such as a polygonal configuration, elliptical configuration, a combination of straight and curved sides, or the like. In some configurations, the recess perimeter 166 may be disposed substantially perpendicular to the second side 146; however, it is contemplated that the recess perimeter 166 may not be perpendicular but instead may be tapered, curved, or angled as the recess perimeter 166 extends away from the second side 146 of the cushion 50 and toward the recess bottom 168.

The recess bottom 168, which may also be referred to as a recess bottom side, extends from the recess perimeter 166 to the connecting portion 164. The recess bottom 168 is offset from the first side 144 and the second side 146 of the cushion 50. For instance, the recess bottom 168 may be recessed or positioned at a depth in the cushion 50 such that the recess bottom 168 is positioned between the first side 144 and the second side 146. The recess bottom 168 may extend or protrude outwardly from the connecting portion 164 in one or more directions.

The connecting portion 164 (e.g., slit, cut, incision, slot, opening) extends from the recess 162 to the first side 144 of the cushion 50. For example, the connecting portion 164 may extend from the recess bottom 168 to the first side 144 of the cushion 50. The connecting portion 164 is smaller or narrower than the recess 162. As such, the connecting portion 164 may be sized to prevent or inhibit an anchor of the fastening arrangement 120 that is received in received in the recess 162 from passing through or being pulled through the connecting portion 164 as will be discussed in more detail below.

Referring to Figures 5-13, various configurations of fastening arrangements 120 will now be described in more detail. In some configurations, the fastening arrangement 120 comprises an anchor 170, a connecting member 172, and an attachment feature 174.

The anchor 170 helps secure the fastening arrangement 120A to the cushion 50. For instance, the anchor 170 (e.g., base, clamp, footing, stiffener) may be received in the cushion 50 and may distribute load forces across a portion of the cushion 50. In some configurations, the anchor 170 is disposed in the recess 162. For instance, the anchor 170 may engage or contact the recess bottom 168 and may extend between the recess bottom 168 and the trim cover 110. In some configurations, the anchor 170 may be aligned with or position flush with the second side 146 of the cushion 50 to support the trim cover 110 and help mask the location of the anchor 170. For instance, aligning a side of the anchor 170 that faces toward the trim cover 110 with the second side 146 of the cushion 50 may provide a visible bulge or indentation from being visible in the trim cover 110 and may provide a desired aesthetic appearance. The anchor 170 may be sized to prevent the anchor 170 from being fit through the connecting portion 164 of the hole 160 or may be sized so that the anchor 170 cannot be pulled out of the recess 162 and into or through the connecting portion 164 in a manner that would result in the fastening arrangement 120 no longer securing the cushion 50 to the frame 100. For instance, the anchor 170 may extend outwardly from the connecting member 172 and the connecting portion 164 of the hole 160.

The connecting member 172 extends from the anchor 170 to the attachment feature 174. The connecting member 172 may extend from the anchor 170 into the connecting portion 164 of the hole 160 in the cushion 50. The connecting member 172 may have any suitable configuration. For instance, the connecting member 172 may be configured as a strap, strip, cord, ribbon, rod, shaft, wire, tube or the like. The connecting member 172 may be sufficiently resistant to elongation so that the fastening arrangement 120 keeps the cushion 50 taut or under tension against the frame 100 when the fastening arrangement 120 is installed, thereby helping to maintain the position of the cushion 50 with respect to the frame 100.

The attachment feature 174 secures the fastening arrangement 120 to the frame 100. In some configurations, the attachment feature 174 is disposed at an end of the connecting member 172 that is disposed opposite the anchor 170. The attachment feature 174 engages or contacts the frame 100. The attachment feature 174 may be provided in various configurations. For instance, the attachment feature 174 may be configured as a fastener (e.g., a threaded fastener, pin, etc.), ring, clip, hook, barbed or "Christmas tree" fastener, bead, enlarged bead, hook and loop fastener, or the like. In some configurations, the attachment feature 174 and the connecting member 172 are disposed on opposite sides of the frame 100 or on opposite sides of a frame member in which the aperture 136 is provided. For instance, in Figures 5 and 7-13 the attachment feature 174 is disposed in the first side (left side from the perspective shown) of a frame member, such as the third frame member 154, while the connecting member 172 is disposed on or extends from an opposing second side (right side or third frame side 154) from the perspective shown. Positioning the attachment feature 174 and the connecting member 172 and opposite sides of the frame 100, frame member, or wall of a frame member may help the attachment feature 174 to resist disengagement from the frame 100.

The aperture 136 in the frame 100, hole 160 in the cushion 50, and fastening arrangement 120 can be provided in various locations. For instance, these features can be provided so that the fastening arrangement 120 is disposed along a side of the seat assembly 10 that faces toward or is disposed underneath a seat occupant or along a side of the seat assembly 10 that does not face toward or is not disposed underneath a seat occupant. For instance, the fastening arrangement 120 in Figures 5-13 is illustrated as extending through a flap 140 in the cushion 50, but it is also contemplated that the fastening arrangement 120 may extend through a hole 160 the main or central body 142 of the cushion 50 and the aperture 136 in the frame 100 would be positioned adjacent to or in alignment with the hole 160 in the main or central body 142. In such a configuration, the fastening arrangement 120 may be further recessed into the cushion 50 so a seat occupant is less likely to notice the presence of the fastening arrangement 120. It is also contemplated that the fastening arrangement 120 may extend through a flap 140 in a different location or orientation, such as in a vertical or more vertical orientation than is shown in Figures 5-13. As an example, the fastening arrangement 120 may extend through a hole 160 in the flap 140 to an aperture 136 that is provided with the second frame side 152.

Referring to Figures 5-13, various fastening arrangement configurations will now be described in more detail.

Referring to Figure 5, a fastening arrangement 120A is shown in which the attachment feature 174 has an enlarged head, such as a bead or a barbed or "Christmas tree" fastener. The attachment feature 174 is insertable through the aperture 136 in at least one direction, such as in a direction that extends to the left from the perspective shown. For instance, the attachment feature 174 may be compressible such that the attachment feature 174 is squeezed or compressed to permit the attachment feature 174 to pass through the aperture 136 and then expands back toward or to its previous configuration once the attachment feature 174 exits the aperture 136. The connecting member 172 extends through the connecting portion 164 of the hole 160 in the cushion 50. The anchor 170 is received in the recess 162 in the cushion 50.

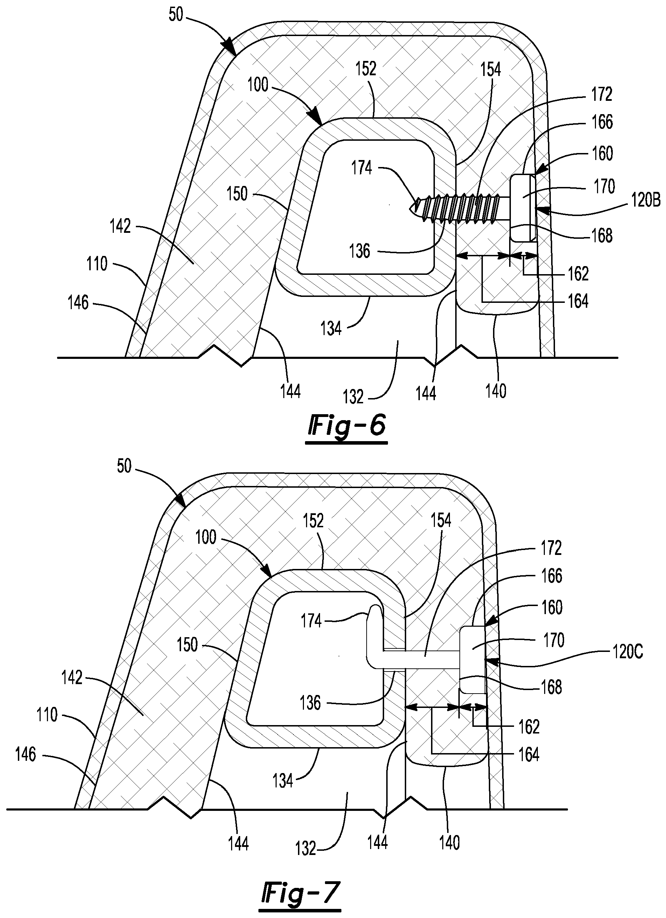

Referring to Figure 6, a fastening arrangement 120B is shown in which the attachment feature 174 is a thread that mates with a corresponding thread in the hole 160 of the cushion 50 or is self-tapping and forms a thread in the hole 160 when rotated and driven into the frame 100. In some configurations, the fastening arrangement 120B may be configured as a screw in which the connecting member 172 is a stiff or rigid shank of the screw and the anchor 170 is the head of the screw.

Referring to Figure 7, a fastening arrangement configuration is shown in which the attachment feature 174 of the fastening arrangement 120C is a hook. The hook may be configured such that the hook is insertable and removable through the aperture 136 and the frame 100 at a particular angles and is not insertable removable through the aperture 136 in other orientations. For instance, in the configuration shown the hook extends along the side of the frame 100 or frame member in a direction that extends away from the aperture 136 to secure the cushion 50 to the frame 100 and inhibit removal from the hole 160. The fastening arrangement 120C may be integrally formed with the connecting member 172 in such a configuration.

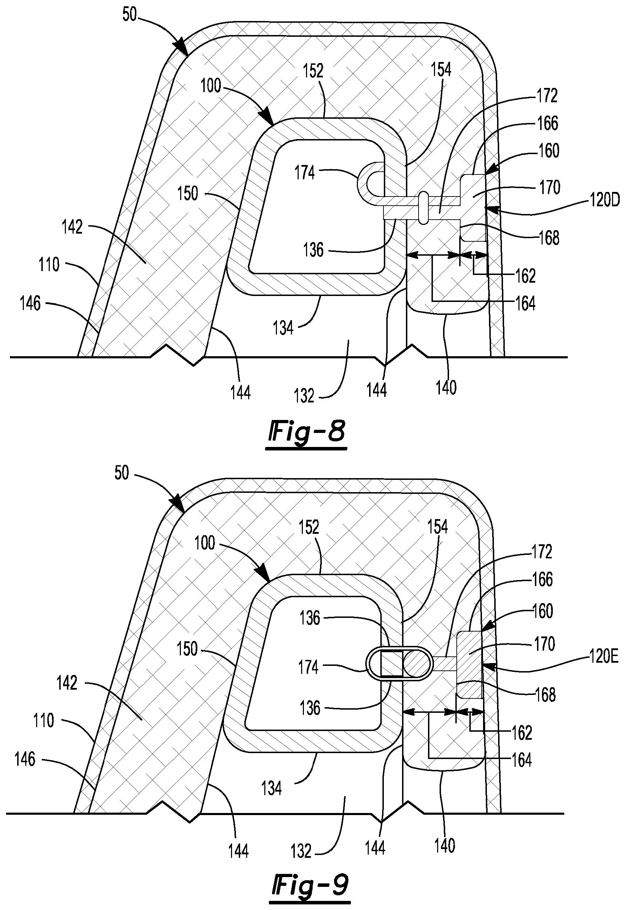

Referring to Figure 8, a fastening arrangement configuration shown in which the fastening arrangement 120D includes an attachment feature 174 that is configured as a hook that is not integrally formed with the connecting member 172. The attachment feature 174 may be secured to the connecting member 172 in any suitable manner, such as with a stitch, adhesive, weld, fastener that extends through the attachment feature 174 and the connecting portion 164, or combinations thereof. In this configuration, the hook is depicted with a more rounded or "J" shape that may make it easier to insert the hook through the aperture 136.

Referring to Figure 9, a fastening arrangement configuration is shown in which the attachment feature 174 of the fastening arrangement 120E extends through at least one aperture 136 in the frame 100 and extends at least partially around the connecting member 172. For example, the attachment feature 174 may be configured as a ring that extends around or encircles the connecting member 172 and at least a portion of the frame 100. For instance, the attachment feature 174 may be a ring that engages and extends around an enlarged end of the connecting member 172, which is depicted with a circular configuration in Figure 9. In some configurations, the attachment feature 174 may extend through a pair of apertures 136, 136 and the frame 100. The ring may initially be provided with a U shape in which the free ends of the ring are inserted through different apertures 136, 136 and are then bent or crimped to extend at least partially around or encircle and intervening region of the frame 100 that is disposed between the pair of apertures 136, 136 to form a loop or ring that at least partially encircles the intervening region, thereby securing the attachment feature 174 to the frame 100 and to the connecting member 172.

Referring to Figure 10, a fastening arrangement configuration is shown in which the anchor 170 of the fastening arrangement 120F is disposed in a hole 160 in the cushion 50 that is configured as a blind hole. The blind hole extends from the first side 144 of the cushion 50 toward the second side 146 of the cushion 50 but may not extend to the second side 146 of the cushion 50. The attachment feature 174 may have any of the configurations previously discussed and secures the fastening arrangement to the frame 100. The connecting member 172 extends from the attachment feature 174 into the hole 160. The anchor 170 is disposed inside the cushion 50. The anchor 170 may be positioned between the first side 144 of the cushion 50 and the second side 146 of the cushion 50. In some configurations, the anchor 170 may be spaced apart from the second side 146 of the cushion 50 so that the filament mesh structure 90 extends between the anchor 170 and the second side 146 to help a person or seat occupant from feeling the presence of the fastening arrangement 120F when the second side 146 of the filament mesh structure 90 is compressed toward the anchor 170.

In some configurations, the anchor 170 is configured as a clip that engages the connecting member 172 and hooks onto (e.g., latches, interlocks, intermeshes, grasps, clenches, seizes) at least one member of the set of filaments 52. For example, the anchor 170 may include one or more arms 180 and one or more barbs 182. In the configuration shown, two arms 180 are depicted that have hooks 184 at their distal ends that are spaced apart from each other. The arms 180 may flex to permit a portion of the connecting member 172 or enlarged end of the connecting member 172 to be inserted through the gap between the hooks 184 and into a cavity that is disposed between the arms 180. The hooks 184 are configured to grasp and retain the connecting member 172 or enlarged end in the cavity. As such, the anchor 170 engages or grasps the connecting member 172. One or more barbs 182 may extend from the arms 180 and may be configured to engage and hook onto filaments 52 of the filament mesh structure 90 to inhibit removal of the anchor 170 from the cushion 50. In some configurations, the barbs 182 may be angled to extend toward the frame 100 or may be disposed substantially parallel to a side of the frame 100 to help inhibit removal of the anchor 170 from the hole 160.

Referring to Figures 11-13, fastening arrangement configurations are shown that employ a hook and loop fastener 190. In these configurations, the attachment feature 174 engages the frame 100 and secures the fastening arrangement to the frame 100 and the connecting member 172 extends from the attachment feature 174 into the hole 160 in the cushion 50, such as in the configurations previously described, including the configurations shown in Figures 5-9. The anchor 170 is disposed in the recess 162 in the cushion 50 and comprises the hook and loop fastener 190. In some configurations, the hook and loop fastener 190 includes two components or straps. The first component 192 or strip of the hook and loop fastener 190 may include hooks or loops. The second component 194 or strip of the hook and loop fastener 190 may include loops or hooks. For instance, if the first component 192 comprises hooks then the second component 194 comprises loops and vice versa. The first component 192 is fastened to the second component 194 when hooks and loops are engaged with each other. The hook and loop fastener 190 may be disposed in the recess 162 in the cushion 50. In Figures 11-13, the anchor 170 and its hook and loop fastener 190 are illustrated as being disposed in a recess 162 in the cushion 50.

Referring to Figure 11, a fastening arrangement configuration is shown in which the first component 192 of the hook and loop fastener 190 engages and may optionally be secured to the cushion 50 and the second component 194 of the hook and loop fastener 190 is secured to the connecting member 172 of the fastening arrangement 120G. In some components, the first component 192 is attached to or mounted to the anchor 170 or stiffening panel of the anchor 170. In some configurations, the anchor 170 or its stiffening panel engages the recess bottom 168. In other configurations, the anchor 170 or first component 192 of the hook and loop fastener 190 is secured to the cushion 50, such as with adhesive, weld, fastener, or the like. The second component 194 is secured (e.g., affixed, attached, coupled, fastened, joined) to the connecting member 172, in any suitable manner, such as with a fastener, adhesive, weld, stitch, or combinations thereof. As depicted, the hook and loop fastener 190 is positioned between the recess bottom 168 and the connecting member 172 and the second component 194 is disposed closer to the trim cover 110 than the first component 192 is disposed to the trim cover 110.

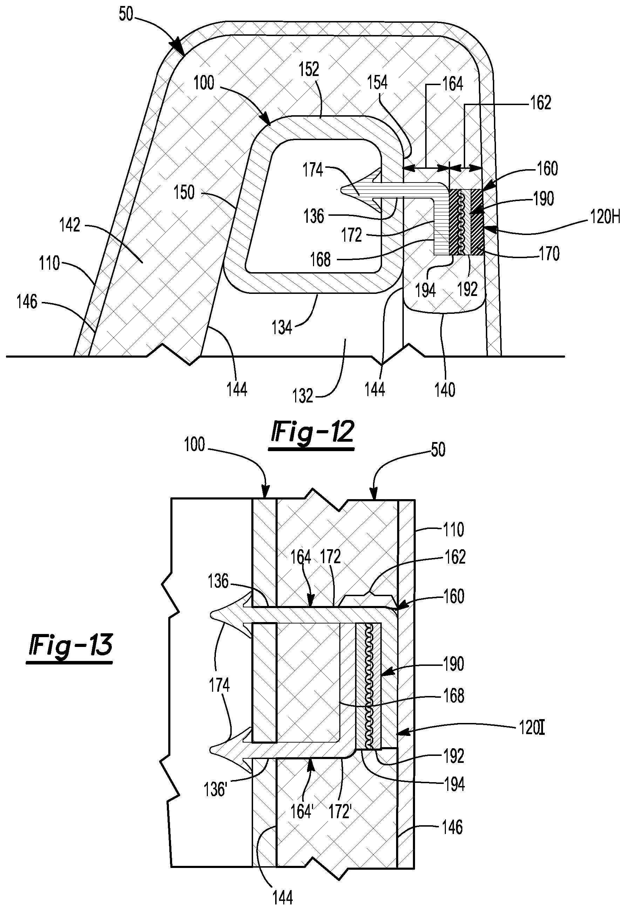

Referring to Figure 12, a fastening arrangement configuration shown in which the connecting member 172 of the fastening arrangement 120H engages the recess bottom 168 and the hook and loop fastener 190 is disposed between the anchor 170 or stiffening panel of the anchor 170 and the connecting member 172. The anchor 170 may include or be configured with a panel or stiffening feature to which the first component 192 is attached. The anchor 170 or stiffening panel of the anchor 170 may be disposed proximate and may engage or contact the trim cover 110. The second component 194 is secured to the connecting member 170 as previously discussed. The connecting member 172 may engage the recess bottom 168 and may be attached to or detached from the cushion 50. As such, the hook and loop fastener 190 is positioned between the anchor 170 or stiffening panel of the anchor 170 and the connecting member 172 and the first component 192 is disposed closer to the trim cover 110 than the second component 194 is disposed to the trim cover 110.

Referring to Figure 13, a fastening arrangement configuration shown in which a plurality of connecting members and attachment features are provided with the fastening arrangement 120I. For instance, the fastening arrangement may comprise a first connecting member 172 and a second connecting member 172'. The first connecting member 172 and the second connecting member 172' are secured to the frame 100 with corresponding attachment features 174 that may have any of the configurations previously discussed. Each attachment feature may be associated with or disposed adjacent to a different aperture 136, 136' in the frame 100. The first connecting member 172 may extend through a first connecting portion 164 in the cushion 50. The second connecting member 172' may extend through a second connecting portion 164' in the cushion 50. In some configurations, the first connecting portion 164 and the second connecting portion 164' meet or extend from the recess 162 in the cushion 50. The hook and loop fastener 190 may be fastened to the first connecting member 172 and the second connecting member 172'. For instance, the first component 192 of the hook and loop fastener 190 may be secured to the first connecting member 172 and the second component 194 of the hook and loop fastener 190 may be secured to the second connecting member 172'. The first component 192 is engaged with the second component 194 to fasten the first connecting member 172 to the second connecting member 172'. As such, the first connecting member 172 and the second connecting member 172' are secured to the frame 100 and are fastened or secured to each other with the hook and loop fastener 190 and secure the cushion 50 to the frame 100 therebetween.

A seat assembly may be assembled using various method steps. In some configurations, the fastening arrangement 120 is installed after the cushion 50 is placed on the frame 100 and before one or more other components, such as the trim cover 110, are installed on or over the cushion 50. For instance, a seat assembly may be assembled by positioning a cushion 50 on a frame 100 and then securing the cushion 50 to the frame 100 with a fastening arrangement 120, that extends through the aperture 136 in the frame 100.

In some configurations, positioning the cushion 50 on the frame 100 further comprises folding or bending the cushion 50, such as one or more flaps 140 of the cushion 50 around the frame 100 before securing the cushion 50 to the frame 100 with the fastening arrangement 120. Folding or bending the cushion 50 around the frame 100 may position the first side 144 of the cushion 50 in engagement with multiple sides of the frame as previously discussed.

In some configurations, securing the cushion 50 to the frame 100 with the fastening arrangement further comprises inserting the fastening arrangement 120 into or through the hole 160 in the cushion 50. The fastening arrangement 120 may be inserted into the hole 160 before or after positioning the cushion 50 on the frame 100. For instance, in some configurations the fastening arrangement 120 is inserted into the hole 160 in the cushion 50 and the aperture 136 in the frame 100 after the cushion 50 is positioned on the frame 100. In other configurations, the fastening arrangement 120 is positioned in the hole in the cushion 50 before the cushion 50 is positioned on the frame 100 and then the fastening arrangement 120 is inserted into the aperture 136 when the cushion 50 is disposed on the frame 100. In other configurations such as like the configuration in Figure 10, the anchor 170 may be inserted into the hole 160 in the cushion 50, the connecting member 172 is secured to the frame 100 with the attachment feature 174, and then the connecting member 172 is secured to the anchor 170 after the cushion 50 is positioned on the frame 100. The trim cover 110 may be installed upon or over the cushion 50 after securing the cushion 50 to the frame 100 with the fastening arrangement 120.

Clause 1. A seat assembly comprising: a frame comprising an aperture; a cushion comprising a mesh member, the mesh member comprising a set of filaments of polymeric material, wherein at least two members of the set of filaments are looped and bonded to each other; wherein the cushion is disposed on the frame; and a fastening arrangement that secures the cushion to the frame, the fastening arrangement extending through the aperture in the frame.

Clause 2. The seat assembly of clause 1 further comprising a trim cover disposed on the cushion, wherein the fastening arrangement supports the trim cover and is detached from the trim cover.

Clause 3. The seat assembly of clause 1 or clause 2 wherein the fastening arrangement extends through a hole in the cushion.

Clause 4. The seat assembly of clause 3 wherein the hole in the cushion is a through hole extending from a first side of the cushion that faces toward the frame to a second side of the cushion disposed opposite the first side.

Clause 5. The seat assembly of clause 3 or clause 4 wherein the hole in the cushion further comprises a recess extending from the second side of the cushion and a connecting portion extending from the recess to the first side of the cushion, wherein the recess is at least partially defined by a recess bottom extending from the connecting portion and a recess perimeter extending from the recess bottom toward the second side.

Clause 6. The seat assembly of clause 5 wherein the fastening arrangement comprises an anchor disposed in the recess.

Clause 7. The seat assembly of clause 6 wherein the fastening arrangement comprises a connecting member extending from the anchor into the connecting portion of the hole in the cushion.

Clause 8. The seat assembly of clause 7 wherein the fastening arrangement comprises an attachment feature that engages the frame and secures the fastening arrangement to the frame.

Clause 9. The seat assembly of clause 8 wherein the attachment feature and the connecting member are disposed on opposite sides of the frame.

Clause 10. The seat assembly of clause 8 or clause 9 wherein the attachment feature extends through the aperture in the frame and extends at least partially around the connecting member.

Clause 11. The seat assembly of clause 3 wherein the fastening arrangement comprises an attachment feature that engages the frame and secures the fastening arrangement to the frame, a connecting member extending from the attachment feature into the hole in the cushion, and an anchor disposed inside the cushion and positioned between a first side of the cushion that faces toward the frame and a second side of the cushion that is disposed opposite the first side.

Clause 12. The seat assembly of any one of clauses 7 to 11 wherein the anchor engages the connecting member and hooks onto at least one member of the set of filaments.

Clause 13. The seat assembly of any one of clauses 3 to 5 wherein the fastening arrangement comprises an attachment feature that engages the frame and secures the fastening arrangement to the frame, a connecting member extending from the attachment feature into the hole in the cushion, and an anchor disposed in the recess, the anchor comprising a hook and loop fastener.

Clause 14. The seat assembly of clause 13 wherein the hook and loop fastener includes a first component secured to the cushion and a second component secured to the connecting member, the first component being fastened to the second component.

Clause 15. The seat assembly of clause 13 when dependent on clause 5 wherein the connecting member engages the recess bottom and the hook and loop fastener is disposed between the anchor and the connecting member.

Clause 16. The seat assembly of clause 13 wherein the fastening arrangement further comprises a second connecting member secured to the frame and extends through a second hole in the cushion, wherein the hook and loop fastener includes a first component secured to the connecting member and a second component secured to the second connecting member, the first component being fastened to the second component.

Clause 17. A method of assembling a seat assembly, comprising: positioning a cushion on a frame, the cushion comprising a mesh member, the mesh member comprising a set of filaments of polymeric material wherein at least two members of the set of filaments are looped and bonded to each other, and the frame comprising an aperture; and securing the cushion to the frame with a fastening arrangement, the fastening arrangement extending through the aperture in the frame.

Clause 18. The method of clause 17 wherein positioning the cushion on the frame further comprises folding the cushion around the frame before securing the cushion to the frame such that a first side of the cushion engages a first frame side of the frame and a second frame side of the frame.

Clause 19. The method of clause 17 or clause 18 wherein securing the cushion to the frame with the fastening arrangement further comprises inserting the fastening arrangement through a hole in the cushion, the hole extending from a first side of the cushion that faces toward the frame to a second side of the cushion disposed opposite the first side.

Clause 20. The method of any one of clauses 17 to 19 further comprising installing a trim cover over the cushion after securing the cushion to the frame.

While exemplary embodiments are described above, it is not intended that these embodiments describe all possible forms according to the disclosure. In that regard, the words used in the specification are words of description rather than limitation, and it is understood that various changes may be made without departing from the spirit and scope of the disclosure. Additionally, the features of various implementing embodiments may be combined to form further embodiments according to the disclosure.

## Claims

1. A seat assembly comprising:
a frame comprising an aperture;
a cushion comprising a mesh member, the mesh member comprising a set of filaments of polymeric material, wherein at least two members of the set of filaments are looped and bonded to each other, and wherein the cushion is disposed on the frame; and
a fastening arrangement that secures the cushion to the frame, the fastening arrangement extending through the aperture in the frame.

2. The seat assembly of claim 1 further comprising a trim cover disposed on the cushion, wherein the fastening arrangement supports the trim cover and is detached from the trim cover.

3. The seat assembly of claim 1 wherein the fastening arrangement extends through a hole in the cushion.

4. The seat assembly of claim 3 wherein the hole in the cushion is a through hole extending from a first side of the cushion that faces toward the frame to a second side of the cushion disposed opposite the first side.

5. The seat assembly of claim 4 wherein the hole in the cushion further comprises a recess extending from the second side of the cushion and a connecting portion extending from the recess to the first side of the cushion, wherein the recess is at least partially defined by a recess bottom extending from the connecting portion and a recess perimeter extending from the recess bottom toward the second side.

6. The seat assembly of claim 5 wherein the fastening arrangement comprises an anchor disposed in the recess.

7. The seat assembly of claim 6 wherein the fastening arrangement comprises a connecting member extending from the anchor into the connecting portion of the hole in the cushion.

8. The seat assembly of claim 7 wherein the fastening arrangement comprises an attachment feature that engages the frame and secures the fastening arrangement to the frame.

9. The seat assembly of claim 8 wherein the attachment feature and the connecting member are disposed on opposite sides of the frame,
and/or wherein the attachment feature extends through the aperture in the frame and extends at least partially around the connecting member.

10. The seat assembly of claim 3 wherein the fastening arrangement comprises an attachment feature that engages the frame and secures the fastening arrangement to the frame, a connecting member extending from the attachment feature into the hole in the cushion, and an anchor disposed inside the cushion and positioned between a first side of the cushion that faces toward the frame and a second side of the cushion that is disposed opposite the first side,
wherein preferably the anchor engages the connecting member and hooks onto at least one member of the set of filaments.

11. The seat assembly of claim 5 wherein the fastening arrangement comprises an attachment feature that engages the frame and secures the fastening arrangement to the frame, a connecting member extending from the attachment feature into the hole in the cushion, and an anchor disposed in the recess, the anchor comprising a hook and loop fastener.

12. The seat assembly of claim 11 wherein the hook and loop fastener includes a first component secured the cushion and a second component secured to the connecting member, the first component being fastened to the second component,
and/or wherein the connecting member engages the recess bottom and the hook and loop fastener is disposed between the anchor and the connecting member,
and/or wherein the fastening arrangement further comprises a second connecting member secured to the frame and extends through a second hole in the cushion, wherein the hook and loop fastener includes a first component secured to the connecting member and a second component secured to the second connecting member, the first component being fastened to the second component.

13. A method of assembling a seat assembly, comprising:
positioning a cushion on a frame, the cushion comprising a mesh member, the mesh member comprising a set of filaments of polymeric material wherein at least two members of the set of filaments are looped and bonded to each other, and the frame comprising an aperture; and
securing the cushion to the frame with a fastening arrangement, the fastening arrangement extending through the aperture in the frame.

14. The method of claim 13 wherein positioning the cushion on the frame further comprises folding the cushion around the frame before securing the cushion to the frame such that a first side of the cushion engages a first frame side of the frame and a second frame side of the frame.

15. The method of claim 13 or 14, wherein securing the cushion to the frame with the fastening arrangement further comprises inserting the fastening arrangement through a hole in the cushion, the hole extending from a first side of the cushion that faces toward the frame to a second side of the cushion disposed opposite the first side,
and/or the method further comprising installing a trim cover over the cushion after securing the cushion to the frame.
